# EUROPÄISCHE PATENTSCHRIFT

(11) **EP 2 359 021 B1**
(45) Veröffentlichungstag und Bekanntmachung des Hinweises auf die Patenterteilung: **22.10.2014**
(21) Anmeldenummer: 09768054.0
(22) Anmeldetag: 08.12.2009
(51) Int. Cl.: F16D 65/12

(54) **BREMSSCHEIBE**
BRAKE DISC
DISQUE DE FREIN

(30) Priorität: 08.12.2008 DE 102008054397; 19.06.2009 DE 102009027063; 23.06.2009 DE 102009027116
(43) Veröffentlichungstag der Anmeldung: 24.08.2011
(73) Patentinhaber: Sheet Cast Technologies GmbH, 85055 Ingolstadt (DE)
(72) Erfinder: LATHWESEN, Holger, 85395 Heigenhausen (DE)
(74) Vertreter: Bergmeier, Werner
(86) Internationale Anmeldenummer: PCT/EP2009/066656
(87) Internationale Veröffentlichungsnummer: WO 2010/066753

(56) Entgegenhaltungen:
- EP-A1- 1 433 973
- EP-A1- 2 048 404
- DE-A1- 2 557 649
- DE-A1- 4 003 732
- DE-A1-102004 045 327

## Beschreibung

Die vorliegende Erfindung betrifft eine Bremsscheibe gemäß dem Oberbegriff des Anspruchs 1. So eine Bremsscheibe ist z.B. aus der Druckschrift DE-A-25 57 649 bekannt.

Bremsvorgänge haben in der Regel eine starke Erhitzung des Bremsscheibenreibringes zur Folge. Aus dem Temperaturgefälle in Richtung des Bremsscheibentopfes, das zum Schutz vor thermischen Belastungen des Radlagers vonnöten ist, resultieren hohe thermomechanische Spannungen zwischen Bremsscheibentopf und Reibring. Bei einteiligen Bremsscheiben führen diese zur Schirmung des Bremsscheibenreibringes, das wiederum die Ursache für das sogenannte Bremsrubbeln ist.

Zur Vermeidung dieses Effektes ist aus der DE 10 2007 013 512 A1 eine Bremsscheibe bekannt, die einen radial inneren Topf und eine radial äußere Reibscheibe aufweist, wobei die Reibscheibe über Verbindungsstege verfügt, die formschlüssig und ohne Stoffschluss in einem Gießvorgang mit dem radial inneren Topf vergossen sind.

Nachteilig hierbei ist, dass die Schirmung des Bremsscheibenreibrings nicht ausschließlich durch eine primär erwünschte radiale Verschiebung der Reibscheibe zum inneren Topf kompensiert wird, sondern ebenfalls eine axialparallele Verschiebung stattfindet, die nur schwer zu steuern ist und zwangsläufig zu einer geringen Schirmung führt.

Des weiteren erweist sich als nachteilig, dass beim Gießvorgang unbedingt darauf zu achten ist, dass das Tragteil ohne Stoffschluss mit den radial inneren Enden der Verbindungsstege vergossen ist. Nur dann ist es gewährleistet, dass sich die Verbindungsstege bei einer sich wärmebedingt radial ausweitenden Reibscheibe gegenüber dem Tragteil radial verschieben können, um kritische Wärmespannungen zu vermeiden. Diese unbedingte Voraussetzung der Stoffschlussvermeidung schränkt die freie Materialwahl für die Verbindungsstege sowie das zu gießende Bauteil stark ein. Selbst bei differierenden Schmelzpunkten der Verbindungsstege und des zu umgießenden Materials ist ein Stoffschluss nicht zwangsläufig ausgeschlossen, sondern bedarf spezieller Maßnahmen im Rahmen des Gießvorgangs sowie eine aufmerksame Überwachung desselben.

In Anbetracht dessen besteht die Aufgabe der vorliegenden Erfindung darin, eine Bremsscheibe zum Beispiel für ein Personen-, Nutz- oder Schienenfahrzeug sowie ein Verfahren zur Herstellung einer solchen Bremsscheibe zu schaffen, bei welcher der Bremsscheibenreibring auf einfache und somit kostengünstige Art und Weise mit dem Bremsscheibentopf verbunden ist, thermomechanische Spannungen zwischen den beiden Bauteilen während des Bremsvorganges weitgehend ausgeschlossen sind und durch eine relativ freie Materialwahl der Einzelkomponenten Gewichtseinsparungen erzielt werden können.

Die Aufgabe wird gelöst durch eine Bremsscheibe gemäß Anspruch 1.

Erfindungsgemäß weist die Bremsscheibe einen Bremsscheibenreibring und einen Bremsscheibentopf auf, wobei der Bremsscheibentopf aus einem Topfring und Ausdehnungselementen besteht, die radial am Topfring, vorzugsweise am äußeren Umfang des Topfrings, angeordnet sind und an ihrem dem Topfring abgewandten Ende mit dem Bremsscheibenreibring formschlüssig verbunden sind. Die Ausdehnungselemente sind mit dem Bremsscheibenreibring und/oder dem Topfring in Radialrichtung formschlüssig und/oder stoffschlüssig verbunden. Hierdurch wird eine sehr feste Verbindung insbesondere in Radialrichtung der Bremsscheibe gewährleistet. Entgegen dem Stand der Technik liegt folglich keine schwimmende Verbindung zwischen den Ausdehnungselementen und/oder dem Bremsscheibenreibring und/oder dem Topfring vor, die bei gewöhnlich ausgebildeten Ausdehnungselementen normalerweise zur Kompensation der wärmebedingten radialen Ausdehnung des Bremsscheibenreibrings zwingend notwendig ist, um eine Schirmung der Bremsscheibe zu vermeiden.

Die Ausdehnungselemente der Bremsscheibe sind derart ausgebildet, dass sie zum einen länger sind als der kürzeste Abstand zwischen Topfring und Bremsscheibenreibring und zum anderen radialelastisch ausgebildet sind. Hierdurch kann eine Anpassung des Bremsscheibenreibrings an die thermische Ausdehnung des Bremsscheibenreibringes erfolgen, so dass thermomechanische Spannungen zwischen Bremsscheibenreibring und Bremsscheibentopf stark reduziert werden.

Der Bremsscheibenreibring kann seinen Radius bei Erwärmung frei vergrößern bzw. bei Abkühlung frei verkleinern, da er nicht direkt mit dem Topfring gekoppelt ist, sondern indirekt über die Ausdehnungselementen, die radialelastisch ausgebildet sind und sich somit durch eine reversible Längenveränderung an den temperaturabhängigen Radius des Bremsscheibenreibrings anpassen. Somit ist eine Schirmung des Bremsscheibenreibringes weitgehend ausgeschlossen, da die thermomechanischen Spannungen vorzugsweise durch eine ausschließlich radiale Verschiebung zwischen Bremsscheibenreibring und Topfring bei zugleich fester in Radialrichtung formschlüssiger und/oder stoffschlüssiger Koppelung über die Ausdehnungselemente kompensiert werden. Eine unter Umständen stattfindende axialparallele Verschiebung zwischen Bremsscheibenreibring und Topfring kann durch die entsprechende Formgebung der Ausdehnungselemente, die länger sind als der kürzeste Abstand zwischen Topfring und Bremsscheibenreibring, dahingehend gesteuert werden, dass sie vernachlässigbar gering wird. Des weiteren wird durch die thermische Entkopplung des Bremsscheibenreibrings vom Topfring durch die Ausdehnungselemente das Radlager besser vor Hitze geschützt, da durch die verlängerte Wärmeübertragungsstrecke weniger Wärmeenergie vom Bremsscheibenreibring an den Topfring übertragen wird.

Aufgrund der sehr geringen Schirmung eignet sich die erfindungsgemäße Bremsscheibe für die verschiedensten Bremssysteme, insbesondere auch für Festsattelbremsen, die eine sehr geringe Schirmungstoleranz aufweisen.

Besonders vorteilhaft ist es, wenn die Anzahl der an dem Bremsscheibentopf angeordneten Ausdehnungselemente eine Primzahl ist und die Bremsscheibe dadurch mindestens drei, vorzugsweise 19, Ausdehnungselemente aufweist. Auf diese Weise können die Eigenschaften der Bremsscheibe hinsichtlich Festigkeit, Gewicht, Radialelastizität, Schwingungs- und Dämpfungsverhalten ideal beeinflusst werden, um hervorragende Bremseigenschaften bei zugleich maximalem Bremskomfort erzielen zu können. In Bezug auf das Schwingungsverhalten ist eine Primzahl als Anzahl der Ausdehnungselemente deshalb von Vorteil, da eine Anregung des Bremsscheibenreibrings im Bereich seiner Eigenfrequenz nahezu ausgeschlossen ist. Alternativ kann natürlich die Anzahl der Ausdehnungselemente auch eine andere Zahl als eine Primzahl sein. Durch die Anzahl der Ausdehnungselemente verändern sich außerdem die axialparallelen Verschiebungseigenschaften des Bremsscheibenreibrings gegenüber dem Topfring. Durch eine gezielte Variation der Verbindungselementenanzahl kann diese Eigenschaft dahingehend verändert werden, dass die axialparallele Verschiebung stark reduziert wird.

Der Topfring und die Ausdehnungselemente sind aus dem gleichen Werkstoff und/oder einteilig hergestellt sind. Hierdurch kann im Rahmen eines Fertigungsprozesses durch ein oder mehrere Trenn-, Umform- und Urformverfahren sehr einfach und kostengünstig aus beispielsweise einem Blech ein Einleger hergestellt werden, der über variierende Blechstärken verfügen könnte und vorzugsweise in einem darauffolgenden Gießvorgang mit einem Bremsscheibenreibring in Radialrichtung formschlüssig und/oder stoffschlüssig verbunden wird. Hieraus entsteht eine leistungsstarke Bremsscheibe, die sich des weiteren durch geringe Herstellungskosten auszeichnet. Durch die variierende Blechstärke kann die Radialelastizität der Ausdehnungselemente positiv beeinflusst werden sowie die axialparallele Verschiebung des Bremsscheibenreibrings gegenüber des Topfrings gesteuert werden. Alternativ kann der Einleger, bestehend aus Topfring, einem oder mehreren Ausdehnungselementen und/oder Segmenten respektive Kühlrippen, aus einem Nichteisenmetall, Karbon und/oder einem Kunststoff bestehen. Vorteilhafterweise könnte bei der Verwendung dieser Materialien eine zusätzliche Gewichtsreduktion erzielt werden.

Alternativ ist es ebenso vorteilhaft, wenn der Topfring und die Ausdehnungselemente aus unterschiedlichen Materialien hergestellt sind. Abhängig von den spezifischen Anforderungen der einzelnen Bauteile können auf diese Art und Weise die geeignetsten Materialien gewählt werden, um beispielsweise eine ideale Radialelastizität der Ausdehnungselemente sowie ein geringes Gewicht und eine hohe Festigkeit des Topfrings zu gewährleisten.

Besonders bevorzugt ist es, wenn die Ausdehnungselemente mit dem Bremsscheibenreibring und/oder dem Topfring stoffschlüssig verbunden sind. Somit ist bei einer sich wärmebedingt radial ausweitenden Reibscheibe ein Lösen der Ausdehnungselemente vom Bremsscheibenreibring und/oder Topfring nahezu ausgeschlossen, da in Radialrichtung größere Zugkräfte von der form- und stoffschlüssigen Verbindung zwischen den Ausdehnungselementen und dem Bremsscheibenreibring und/oder dem Topfring aufgenommen werden können. Selbiges trifft bei Bremsvorgängen zu, bei denen die Ausdehnungselemente auf Zug belastet werden. Der Stoffschluss ist zwar aufgrund des vorausgesetzten Formschlusses in Radialrichtung für eine sichere Verbindung nicht zwangsläufig notwendig, jedoch begünstigt er des weiteren eine freiere Materialwahl der Ausdehnungselemente sowie des Topfrings und/oder Bremsscheibenreibrings, da die miteinander zu verbindenden Bauteile bei erlaubtem Stoffschluss größeren Schmelzpunkttoleranzen unterliegen dürfen.

Dadurch, dass die Radialelastizität der erfindungsgemäß zugrundeliegenden Bremsscheibe durch die Verbindungselemente selbst realisiert wird und nicht wie bei Lösungen des Stands der Technik durch einen unbedingt zu vermeidenden Stoffschluss, der gießtechnisch nur sehr schwer zu steuern ist, vereinfacht sich des weiteren der Herstellprozess einer solchen Bremsscheibe.

Die Ausdehnungselemente sind im Bereich der in Radialrichtung formschlüssigen und/oder stoffschlüssigen Verbindung mit dem Bremsscheibenreibring und/oder dem Topfring eine radiale und eine axiale Breite aufweisen, die zueinander nicht identisch sind. Durch die radiale bzw. axiale Breite der Ausdehnungselemente im Bereich der in Radialrichtung formschlüssigen und/oder stoffschlüssigen Verbindung kann das radiale bzw. axiale Widerstandsmoment beeinflusst werden. Je breiter die Ausdehnungselemente in der entsprechenden Dimension ausgeführt sind, desto größer ist auch das entsprechende Widerstandsmoment. Zur Reduktion der axialparallelen Verschiebung des Bremsscheibenreibrings und zur Begünstigung der Radialelastizität desselben, ist es besonders vorteilhaft, wenn die axiale Breite der Ausdehnungselemente im Bereich der in Radialrichtung formschlüssigen und/oder stoffschlüssigen Verbindung mit dem Bremsscheibenreibring und/oder Topfring groß und die radiale Breite klein gewählt wird. Um eine möglichst ideale Radialelastizität der Ausdehnungselemente zu gewährleisten, ist es von Vorteil, wenn jeweils zwei benachbarte Ausdehnungselemente beabstandet voneinander angeordnet sind. Dieser Abstand zwischen zwei benachbarten Ausdehnungselementen begünstigt über dies hinaus die Kühlung des Bremsscheibentopfes sowie eine reduzierte Wärmeübertragung des Bremsscheibenreibrings an den Topfring bzw. an das vor Wärme zu schützende Radlager.

Ebenso ist es vorteilhaft, wenn die Ausdehnungselemente im Längs- und/oder Querschnitt eine Freiformgeometrie und/oder eine Evolventengeometrie aufweisen, da hierdurch in Abhängigkeit von der Belastungssituation sehr einfach maximale Festigkeiten der Ausdehnungselemente erzielt werden können, die alternativ durch dickere Querschnitte der Ausdehnungselemente und folglich größerem Gewicht bewirkt werden müssten. Die Ausdehnungselemente können sowohl konkave als auch konvexe Freiformgeometrien aufweisen. Die Evolventengeometrie der Ausdehnungselemente verändert deren Formgebung, insbesondere deren Radius, im Wesentlichen in ausschließlich zwei Dimensionen. Zusätzlich kann durch die entsprechend versteifende Formgebung der Ausdehnungselemente die axialparallele Verschiebung des Bremsscheibenreibrings gegenüber dem Topfring auf einen vernachlässigbar geringen Wert reduziert werden.

Im Hinblick auf eine kostengünstige Bremsscheibe ist es von Vorteil, wenn die Ausdehnungselemente aus Stahlblech hergestellt sind. Dies hat den Vorteil, dass die Ausdehnungselemente durch einfache Umform- und Trennverfahren in die gewünschte Form gebracht werden können, die eine ausreichende Festigkeit und zugleich eine ideale Radialelastizität bei thermomechanischer Belastung gewährleistet. In einer bevorzugten Ausführungsvariante bestehen die Ausdehnungselemente aus Edelstahlblech, da dies den weiteren Vorteil der Korrosionsbeständigkeit in sich birgt.

Ebenso ist es vorteilhaft, wenn die Ausdehnungselemente punkt- und/oder achsensymmetrisch angeordnet sind, da bei einer thermischen Verformung des Bremsscheibenreibringes eine gleichmäßige zentrische Verschiebung des Bremsscheibenreibringes begünstigt und somit eine Schirmung oder unregelmäßige Deformation des Bremsscheibenreibrings vermieden wird.

Alternativ kann es bei speziellen Anwendungsfällen vorteilhaft sein, wenn die Ausdehnungselemente asymmetrisch angeordnet sind. Auf diese Art und Weise ist eine besondere Einflussnahme auf das Schwingungsverhalten der Bremsscheibe möglich, so dass eine Anregung im Bereich der Eigenfrequenz der Bremsscheibe weitestgehend ausgeschlossen werden kann.

Eine weitere vorteilhafte Ausführung der Erfindung besteht darin, dass die Bremsscheibe eine primäre Drehrichtung aufweist und die dem Topfring abgewandten Enden der Ausdehnungselemente in und/oder gegen die primäre Drehrichtung der Bremsscheibe zeigen. Somit ist es möglich, in Abhängigkeit der beiden Belastungsfälle Vorwärts- und Rückwärtsfahrt durch eine spezifische Ausrichtung der Ausdehnungselemente eine ideale Festigkeit zu erzielen, indem die Ausdehnungselemente auf Druck und/oder Zug belastet werden. Des weiteren ist es möglich, durch eine entsprechende Ausrichtung der Ausdehnungselemente das Schwingungsverhalten und das Dämpfungsverhalten der Bremsscheibe positiv zu beeinflussen. Im Hinblick darauf, dass der Topfring und die Ausdehnungselemente des Bremsscheibentopfes in einer bevorzugten Ausführung aus dem gleichen Werkstoff und einteilig hergestellt sind, ist es von Vorteil, wenn alle Ausdehnungselemente in dieselbe Drehrichtung ausgerichtet sind. Somit wird bei der Herstellung des Bremsscheibentopfes aus beispielsweise einem einzigen Blech die zur Verfügung stehende Fläche des Rohbleches ideal ausgenutzt und eine maximal mögliche Anzahl an Ausdehnungselementen erreicht.

Besonders bevorzugt ist es, wenn sich der Querschnitt der Ausdehnungselemente ausgehend von dem Topfring zugewandten Ende bis hin zum Topfring abgewandten Ende verändert, insbesondere verkleinert. Dies begünstigt eine ideale Radialelastizität der Ausdehnungselemente, ohne Einbußen der Festigkeit in Kauf nehmen zu müssen. Selbiges wird dadurch begünstigt, wenn die Ausdehnungselemente mindestens einen, vorzugsweise zwei, durch den Querschnitt bestimmte Soll-Biegebereiche aufweisen, in denen die Ausdehnungselemente in Axial- und/oder Radialrichtung der Bremsscheibe gebogen sind. Vergrößert sich beim Bremsvorgang aufgrund der daraus resultierenden thermomechanischen Belastung der Durchmesser des Bremsscheibenreibringes, so kompensiert die Formgebung der Ausdehnungselemente die unerwünschten thermomechanischen Spannungen zwischen Bremsscheibenreibring und Bremsscheibentopf durch eine reversible radiale Längenvergrößerung der Ausdehnungselemente. Im Idealfall resultiert aus der spezifischen Formgebung der Ausdehnungselemente eine ausschließlich radiale Verschiebung des Bremsscheibenreibringes. Unter Umständen kann jedoch auch eine geringe parallele Verschiebung in Axialrichtung des Bremsscheibenreibringes stattfinden, die jedoch durch die Biegungen in Axial- und Radialrichtung bzw. durch die Formgebung der Ausdehnungselemente dahingehend gesteuert werden können, dass die zu reduzierende axialparallele Verschiebung vernachlässigbar gering wird. Beide Verschiebungsvarianten vermeiden weitgehend eine Schirmung des Bremsscheibenreibrings.

Ebenso ist es vorteilhaft, wenn die Ausdehnungselemente eine kaltluftzuführende Formgebung aufweisen, so dass das Radlager nicht nur durch die thermische Entkopplung von Bremsscheibenreibring und Topfring, sondern zusätzlich noch durch die Ausnutzung der Konvektion vor Überhitzung geschützt wird. Des weiteren ist die kaltluftzuführende Formgebung der Ausdehnungselemente vorteilhaft für die Kühlung des Bremsscheibenreibrings.

Besonders bevorzugt ist es, wenn die Ausdehnungselemente an dem Bremsscheibenreibring zugewandten Ende eine Hinterschneidung, insbesondere einen Hammerkopf, aufweisen, so dass bei Zug- oder Druckbelastung eine feste Verankerung im Bremsscheibenreibring gewährleistet ist. Der Hammerkopf hat über dies hinaus den weiteren Vorteil, dass er sehr einfach durch beispielsweise Schneiden oder Stanzen aus einem planen Blechrohling hergestellt werden kann. Es sind jedoch auch alternative Hinterscheidungsformen denkbar, wie beispielsweise Pfeilspitze, Trapez oder Kugelkopf.

Ebenso ist es vorteilhaft, wenn die Ausdehnungselemente nach Festigkeits- und Ausdehnungserfordernissen und nach ästhetischen Gesichtspunkten geformt sind, so dass sie beispielsweise bei grobspeichigen Felgen zu einem anmutigen Erscheinungsbild des Gesamtfahrzeugs beitragen.

Besonders vorteilhaft ist es, wenn die in Radialrichtung formschlüssige und/oder stoffschlüssige Verbindung zwischen den Ausdehnungselementen und dem Bremsscheibenreibring und/oder dem Topfring gießtechnisch hergestellt ist. Dies stellt eine einfache, schnell herstellbare und kostengünstige Verbindung dar, die keine zusätzlichen Bauteile, wie beispielsweise Bolzen oder Schrauben, benötigt. Hierbei ist es besonders vorteilhaft, wenn das zu gießende Bauteil, der Bremsscheibenreibring und/oder der Topfring, aus Nichteisenmetall, Grauguss oder Edelstahlguss besteht. Nichteisenmetalle sind insbesondere aufgrund ihrer Gewichtsersparnis vorteilhaft. Grauguss eignet sich insbesondere aufgrund seiner hervorragenden Reibeigenschaften als Gussmaterial, wobei Edelstahlguss noch den zusätzlichen Vorteil der Korrosionsbeständigkeit aufweist. Alternativ kann der Bremsscheibenreibring, mit dem die Ausdehnungselemente in Radialrichtung formschlüssig und/oder stoffschlüssig verbunden sind, aber auch aus Keramik bestehen.

Ist der Bremsscheibenreibring massiv ohne Zwischenräume ausgeprägt, so ist er vorteilhafterweise nicht so korrosionsanfällig. Alternativ ist es in besonderen Anwendungsfällen vorteilhaft, wenn der Bremsscheibenreibring aus einem Bremsscheibenreibbandpaar besteht, das über Segmente, insbesondere in primärer Drehrichtung zeigende Kühlrippen, miteinander verbunden ist. Somit kann die Erhitzung des Bremsscheibenreibringes durch Ausnutzung der Konvektion reduziert werden. Die Segmente sind idealerweise symmetrisch angeordnet, um bei thermischer oder mechanischer Belastung ein unkontrolliertes Deformieren der Bremsscheibe zu vermeiden.

Des weiteren erweist es sich als besonders vorteilhaft, wenn mindestens ein Ausdehnungselement in Radialrichtung formschlüssig und/oder stoffschlüssig mit einem der Segmente verbunden ist. Hierdurch wird eine sehr feste Verbindung zwischen Ausdehnungselement und Bremsscheibenreibring gewährleistet, da das gesamte Verbindungsende des Ausdehnungselements, das vorzugsweise als Hammerkopf ausgeformt ist, in Radialrichtung formschlüssig und/oder stoffschlüssig vom Segment umgeben ist. Insbesondere bei Zugbelastung verhindert diese Verbindung ein Herausrutschen des Ausdehnungselementes aus dem Bremsscheibenreibring.

Alternativ oder zusätzlich ist es ebenso vorteilhaft, wenn mindestens ein Ausdehnungselement zwischen zwei Segmenten und zwischen dem Bremsscheibenreibbandpaar angeordnet und in Radialrichtung formschlüssig und/oder stoffschlüssig mit mindestens einem der Segmente verbunden ist. Hierdurch können die Segmente relativ schlank ausgebildet werden, so dass durch die verminderten Massenanhäufungen sogenannte Hot Spots vermieden werden. Gleiches wird dadurch bewirkt, indem in einer besonders vorteilhaften Weise mindestens ein Ausdehnungselement zwischen zwei Segmenten und zwischen dem Bremsscheibenreibbandpaar angeordnet und in Radialrichtung formschlüssig und/oder stoffschlüssig mit dem Bremsscheibenreibbandpaar verbunden ist.

Bevorzugt ist es, wenn der Bremsscheibentopf aus mehreren Bauteilen besteht, da im Hinblick auf die unterschiedlichen Anforderungen des Topfrings und der Ausdehnungselemente verschiedene Materialien verwendet werden können, um die Gesamteigenschaften des Bremsscheibentopfes hinsichtlich Radialelastizität, Festigkeit, Schwingungsverhalten und Dämpfungsverhalten zu optimieren.

Insbesondere bei Nutz-, Schienen- und hoch motorisierten Personenfahrzeugen ist der Bremsscheibentopf sehr starken mechanischen Belastungen ausgesetzt. In diesem Fall ist es besonders vorteilhaft, wenn der Bremsscheibentopf aus zwei oder mehreren übereinander angeordneten Stahlblechen besteht.

Besonders bevorzugt ist es, wenn der Bremsscheibentopf aus einem gegossenen Topfring und einem oder mehreren mit dem Topfring in Radialrichtung formschlüssig und/oder stoffschlüssig verbundenen Ausdehnungselementen aus Stahlblech besteht. Hierdurch können sowohl die Dämpfungs- als auch die Schwingungseigenschaften der Bremsscheibe beeinflusst sowie eine optimale Gewichtsverteilung bewirkt werden.

In einem Verfahren zur Herstellung einer solchen Bremsscheibe werden vorteilhafterweise die radial inneren Enden der Ausdehnungselemente in Radialrichtung formschlüssig und/oder stoffschlüssig mit dem Topfring und die radial äußeren Enden der Ausdehnungselemente mit dem Bremsscheibenreibring vergossen, wobei der gegossene Bremsscheibenreibring und der Topfring mit einem oder mehreren Verbindungselementen, welche den Bremsscheibenreibring und den Topfring steif miteinander verbinden, in einem Stück gegossen werden. Anschließend werden die durch die Verbindungselemente steif miteinander verbundenen Reibflächen des Bremsscheibenreibringes und die Auflagefläche des Topfringes plangedreht, dass ein ruhiger Lauf und ein ruckelfreies Bremsen der Bremsscheibe gewährleistet ist. Danach werden zur Fertigbearbeitung der Bremsscheibe die Verbindungselemente zwischen Bremsscheibenreibring und Topfring abgetrennt, so dass der Topfring und der Bremsscheibenreibring ausschließlich durch die Ausdehnungselemente miteinander verbunden sind. Neben der schnellen und kostengünstigen Fertigung der Bremsscheibe hat das Verfahren den weiteren Vorteil, dass durch die temporäre Verbindung des Topfrings und des Bremsscheibenreibrings über die Verbindungselemente eine effektive und effiziente Bearbeitung der Reibflächen und der Auflageflächen erfolgen kann, ohne eine gravierende Axialbelastung auf die Ausdehnungselemente aufbringen zu müssen. Somit sind die Ausdehnungselemente während des gesamten Bearbeitungsprozesses vor einer axialen Überbelastung geschützt.

Bevor das eigentliche Eingießen eines Einlegers, durch den der Topfring, ein oder mehrere Ausdehnungselemente und/oder ein oder mehrere Segmente respektive Kühlrippen ganz oder zumindest teilweise gebildet werden, erfolgen kann, muss zunächst ein Kern hergestellt werden, in den der oder die Einleger vor dem Umgießen einzubringen sind.

Für gewöhnlich erfolgt die Kernherstellung mittels eines Kernherstellungswerkzeuges. In dieses wird ein Einleger eingelegt. Nach dem Verschließen des Kernherstellungswerkzeuges wird Sand eingeschossen, mittels dem der Kern gebildet wird. Anschließend wird das Kernherstellungswerkzeug wieder geöffnet. Der Einleger ist jetzt in den einteiligen Kern so eingebracht, dass ausschließlich Kontaktbereiche frei liegen. Es wird von einem eingeschossenen Einleger gesprochen. In einem anschließenden Gießverfahren wird der eingeschossene Einleger an seinen Kontaktbereichen mit dem Bremsscheibenreibring und/oder dem Topfring in Radialrichtung formschlüssig und/oder stoffschlüssig vergossen.

Optional kann der Kern vor dem Umgießen mit einer Schlichte behandelt werden. Als Schlichte werden Suspensionen bzw. Dispersionen von feuerfesten Stoffen bezeichnet, die in Form eines dünnen Überzuges auf Einleger, Formen, Kerne oder Gießwerkzeuge aufgetragen werden und Aufgaben wie Wärmeisolation, Glättung und/oder Trennung erfüllen und gewährleisten müssen. Im Falle des eingeschossenen Einlegers erweist es sich als problematisch, dass die Schlichte nicht auf der gesamten Oberfläche des Kerns aufgebracht werden kann, da Teilbereiche in direktem Kontakt mit dem Einleger stehen. Erfindungsgemäß wird deshalb ein zweiteiliger Kern hergestellt, in den die Einleger eingelegt und wieder entnommen werden können, so dass die gesamte Oberfläche des Kerns mit einer Schlichte überzogen werden kann.

In einem Verfahren zur Herstellung einer Bremsscheibe, bei dem Ausdehnungselemente gießtechnisch mit einem Bremsscheibenreibring und einem Topfring verbunden werden, wird in einem ersten Schritt zwischen einem Oberteil und einem Unterteil eines zweiteiligen Kerns ein Einleger eingelegt. Der Einleger kann die Ausdehnungselemente, die Kühlrippen und/oder den Topfring bilden. Die Einleger können sowohl einteilig als auch mehrteilig ausgebildet sein. Alternativ können auch mehrere Einleger Verwendung finden. Nachdem der Kern mit dem Einleger bestückt wurde, wird das Oberteil mit dem Unterteil verbunden. Das Oberteil wird mit dem Unterteil verklebt und/oder gesteckt. Danach wird der Bremsscheibenreibring, bestehend aus zwei von einander getrennten Reibbändern, und/oder der Topfring mit den Einlegern in Radialrichtung formschlüssig und/oder stoffschlüssig vergossen.

Bekannte Lösungen müssen zur Gewährleistung der Radialelastizität unter allen Umständen eine stoffschlüssige Verbindung zwischen den Ausdehnungselementen und dem Bremsscheibenreibring und/oder dem Topfring vermeiden. Dies ist jedoch nur sehr schwer zu steuern. Vorteilhafterweise muss beim vorliegenden Verfahren auf diesen Aspekt keine Rücksicht genommen werden, da die Radialelastizität ausschließlich über die charakteristische Formgebung der Ausdehnungselemente bewirkt wird. Der Stoffschluss ist ferner erwünscht, da sich hierdurch vorteilhafterweise die Festigkeit der Verbindung zwischen den Ausdehnungselementen und dem Bremsscheibenreibring und/oder dem Topfring verbessert.

Besonders vorteilhaft ist es, wenn der zweiteilige Kern vor dem Einlegen der Einleger mit einer Schlichte behandelt wird. Erfindungsgemäß wird folglich die Oberfläche des Unterteils und des Oberteils mit einer solchen Schlichte behandelt, insbesondere besprüht oder getaucht, so dass sich insbesondere die Oberflächengüte des zweiteiligen Kerns verbessert. Dies hat den Vorteil, dass ein kostengünstigerer Sand zur Herstellung des Kerns und/oder der Ober- und Unterform verwendet werden kann, ohne dabei Qualitätseinbußen der gegossenen Bremsscheibe in Kauf nehmen zu müssen.

Im Hinblick auf eine gewichtsreduzierte Ausführungsform der Bremsscheibe ist es besonders vorteilhaft, wenn zuerst der Bremsscheibenreibring gegossen wird und erst danach der Topfring mit einem Nichteisenmetall gegossen wird. Nichteisenmetalle haben im Vergleich zu Eisenmetallen den Vorteil, dass sie in der Regel ein geringeres Gewicht aufweisen. Wichtig bei der Herstellung dieser Ausführungsvariante ist es, dass die Einleger beim Gießen des Topfrings vorgewärmt werden, um ein perfektes Gussergebnis zu erhalten.

Ebenso ist es vorteilhaft, wenn aus Gründen der Gewichtsersparnis auch der Bremsscheibenreibring aus einem leichteren Nichteisenmetall gegossen wird. Da jedoch Nichteisenmetalle im Vergleich zu Eisenmetallen einen geringeren Schmelzpunkt aufweisen, besteht die Gefahr, dass sich der Bremsscheibenreibring während des Bremsens bei hoher Belastung verformt, so dass die Bremskraft des Fahrzeugs stark reduziert wird. Um diesem Effekt entgegenzuwirken ist es besonders vorteilhaft, wenn der aus einem Nichteisenmetall gegossene Bremsscheibenreibring in einem nachgelagerten Verfahrensschritt zur Steuerung des Wärmeeintrags mit einem Material beschichtet wird, dessen Schmelzpunkt im Vergleich zum Nichteisenmetall um so viel höher liegt, dass ein Schmelzen des Bremsscheibenreibrings weitgehend ausgeschlossen ist.

Weitere Vorteile der Erfindung sind in den nachfolgenden Ausführungsbeispielen beschrieben. Es zeigen:
- **Figur 1**: eine perspektivische Ansicht eines Bremsscheibentopfes, der als Einleger ausgebildet ist,
- **Figur 2**: einen Schnitt durch eine Bremsscheibe, bei der der Bremsscheibentopf in Radialrichtung formschlüssig und/oder stoffschlüssig mit dem Verbindungssegment des Bremsscheibenreibringes verbunden ist,
- **Figuren 3 und 4**: jeweils im Halbschnitt eine Bremsscheibe, bei der der Bremsscheibentopf mit den Bremsscheibenreibbandpaaren verbunden ist,
- **Figur 5**: einen Schnitt durch eine alternative Ausführungsform einer Bremsscheibe, bei der der Bremsscheibentopf mit jeweils zwei Segmenten des Bremsscheibenreibringes verbunden ist,
- **Figur 6**: einen Schnitt durch eine Bremsscheibe, bei der die Ausdehnungselemente aus Stahlblech mit einem gegossenen Topfring und einem gegossenen Bremsscheibenreibring aus Grauguss verbunden sind,
- **Figur 7**: eine Draufsicht auf eine noch nicht fertig bearbeitete Bremsscheibe, bei der der Topfring und der Bremsscheibenreibring über Verbindungselemente miteinander verbunden sind,
- **Figuren 8 und 9**: einen Schnitt durch eine alternative Ausführungsform einer Bremsscheibe, bei der zwei Bremsscheibentöpfe mit dem Bremsscheibenreibring verbunden sind,
- **Figuren 10 und 11**: eine perspektivische Ansicht eines zweiteiligen Kerns vor und nach dem Verkleben und
- **Figur 12**: eine perspektivische Ansicht einer alternativen Ausführungsform einer Bremsscheibe, bei der die Ausdehnungselemente und zumindest einige der Segmente respektive Kühlrippen durch Einleger gebildet werden.

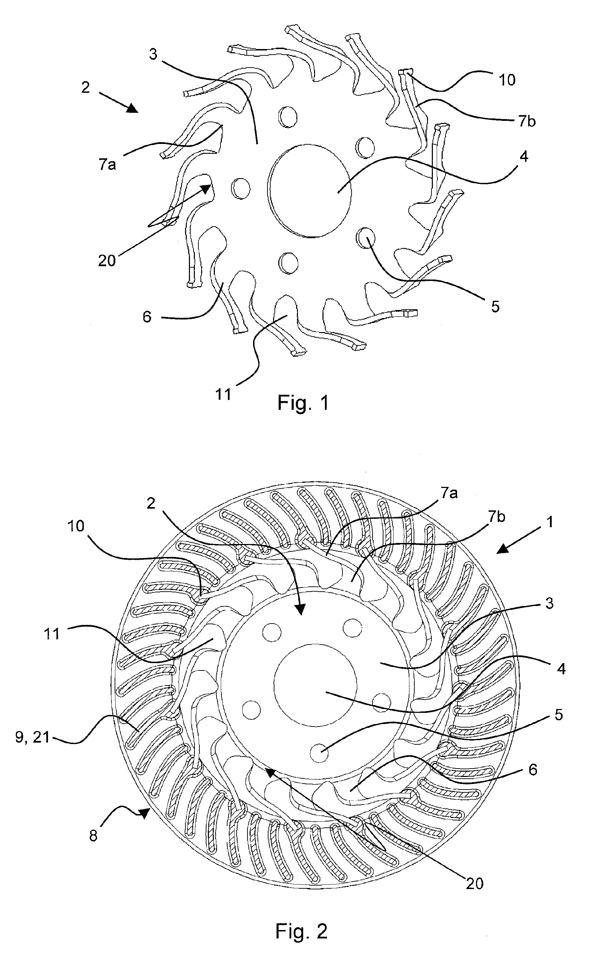

Figur 1 zeigt ein Ausführungsbeispiel eines Bremsscheibentopfes 2, der einen Topfring 3 und Ausdehnungselemente 6 aufweist. Der Topfring 3 verfügt über eine mittig angeordnete Zentrierung 4 und Anschraublöcher 5, so dass eine zentrierte Befestigung des Bremsscheibentopfes an einer Achse vorgenommen werden kann. Die Ausdehnungselemente 6 sind aus dem gleichen Werkstoff wie der Topfring 3 einteilig hergestellt und bilden somit einen einteiligen Einleger 20. Die Ausdehnungselemente 6 sind am äußeren Umfang des Topfringes 3 angeordnet und voneinander durch Materialfreiräume 11 getrennt und zeigen mit ihrem dem Topfring 3 abgewandten Ende in die primäre Drehrichtung der Bremsscheibe 1. Somit wird gewährleistet, dass die Ausdehnungselemente 6 beim Bremsvorgang primär auf Druck belastet werden. Des weiteren kann durch die einheitliche Anordnung aller Ausdehnungselemente 6 in eine Drehrichtung eine ideale Materialausnutzung bei der Herstellung des einteiligen Bremsscheibentopfes 2 durch beispielsweise Schneiden oder Stanzen der Materialfreiräume erzielt werden.

Alternativ können unter Beibehaltung der Symmetrie einzelne Ausdehnungselemente 6 gegen die primäre Drehrichtung ausgerichtet sein, um auch bei Bremsvorgängen aus einer schnellen Rückwärtsfahrt eine ausreichend hohe Festigkeit des Bremsscheibentopfes 2 zu gewährleisten.

Die Ausdehnungselemente 6 weisen Verjüngungen 7 auf, bei denen sich der Querschnitt der Ausdehnungselemente 6 verringert. Durch diese Verjüngungen 7 werden Soll-Biegebereiche der Ausdehnungselemente 6 bestimmt. In diesen Bereichen werden die Ausdehnungselemente 6 bei der Herstellung des einteiligen Bremsscheibentopfes 2 respektive Einlegers 20 in besonderer Art und Weise gebogen. Im gezeigten Ausführungsbeispiel sind die Ausdehnungselemente 6 im Bereich der Verjüngung 7a in axialer Richtung und im Bereich der Verjüngung 7b in radialer Richtung nach außen gebogen. Des weiteren besitzt jedes Ausdehnungselement 6 an seinem Ende einen Hammerkopf 10, der in Radialrichtung einen hervorragenden Formschluss zwischen den Ausdehnungselementen 6 und dem Bremsscheibenreibring 8 gewährleistet.

Figur 2 zeigt wie dieser in Figur 1 beschriebene Bremsscheibentopf 2, der in einem Trenn- und Umformverfahren materialeinheitlich und einstückig hergestellt ist, mit einem radial außen angeordneten Bremsscheibenreibring 8 zu einer Bremsscheibe 1 verbunden ist. Der Bremsscheibenreibring 8 weist zwei in Axialrichtung parallel angeordnete Reibbänder 14a, 14b auf, die über Segmente 9 oder insbesondere, wie in Figur 2 dargestellt, über Kühlrippen 21 verbunden sind. Der Bremsscheibenreibring 8 ist aus einem Werkstoff und einteilig hergestellt. Der Hammerkopf 10 der Ausdehnungselemente 6 des einstückigen Bremsscheibentopfes 2 bzw. Einlegers 20 ist in Radialrichtung formschlüssig und/oder stoffschlüssig mit einzelnen Segmenten 9 respektive Kühlrippen 21 verbunden, die hierfür an ihrem radial inneren Ende stabiler ausgeführt sind. Alle weiteren Segmente 9 respektive Kühlrippen 21, die keine Verbindung mit einem der Hammerköpfe 10 eingehen, sind dagegen leichter und materialsparender ausgeprägt.

In dieser bevorzugten Ausführungsform der Erfindung wird die in Radialrichtung formschlüssige und/oder stoffschlüssige Verbindung zwischen Bremsscheibentopf 2 und Bremsscheibenreibring 8 in einem Gießverfahren hergestellt. Hierbei wird der Bremsscheibentopf 2, der aus einem einzigen Werkstoff und einteilig hergestellt ist, zu Beginn vorgewärmt, um beim Gießvorgang Lunker zwischen der Verbindung des Bremsscheibentopfes 2 und des Bremsscheibenreibringes 8 zu vermeiden. Der Bremsscheibentopf 2 wird anschließend unter leichtem radialem Druck in eine Kokille gelegt und mit einem Gussmaterial, vorzugsweise Grauguss oder Edelstahlguss, umgossen. Durch das axial vorgespannte Eingießen des Bremsscheibentopfes 2 befindet sich dieser bei normaler Betriebstemperatur des Bremsscheibenreibrings 8 in Bezug auf die thermisch bedingte Radialausdehnung idealerweise in einer zug- und druckneutralen Stellung.

Im Gegensatz zu vergleichbaren Bremsscheiben des Stands der Technik besteht ein wesentlicher Vorteil darin, dass bei der dargestellten bevorzugten Lösung nicht darauf zu achten ist, dass beim Formschluss zwischen Hammerkopf 10 und Verbindungssegment 9 bzw. Kühlrippe 21 eine stoffschlusslose Verbindung garantiert wird. Diese Voraussetzung ist jedoch bei vergleichbaren Bremsscheiben unbedingt notwendig, um durch die daraus resultierende schwimmende Lagerung thermomechanische Ausdehnungen des Bremsscheibenreibrings 8 zu kompensieren. Die Herstellung einer solchen stoffschlusslosen Verbindung ist jedoch gießtechnisch sehr schwer zu steuern und hat noch den weiteren Nachteil, dass die Materialien des Bremsscheibenreibrings 8 und des Bremsscheibentopfes 2 nicht frei wählbar sind, sondern auf ausreichend große Schmelzpunktunterschiede der beiden Bauteile zu achten ist.

Im Gegensatz dazu ist beim dargestellten Ausführungsbeispiel eine Stoffschlussverbindung zwischen Bremsscheibentopf 2 und Bremsscheibenreibring 8 nicht nur technisch einfacher zu realisieren, sondern hat über dies hinaus noch den Vorteil, dass die Verbindung höhere Zugkräfte aufnehmen kann.

Der Grund, weshalb die Verbindung sowohl mit als auch ohne Stoffschluss realisiert sein kann, besteht darin, dass die bei Erhitzung des Bremsscheibenreibringes 8 stattfindende radiale Ausdehnung durch die spezifische Form der Ausdehnungselemente 6 kompensiert wird und nicht wie bei bekannten Lösungen durch eine schwimmende Lagerung der Ausdehnungselemente. Die Ausdehnungselemente 6 sind im dargestellten Ausführungsbeispiel länger als der kürzeste Abstand zwischen Topfring 3 und Bremsscheibenreibring 8 ausgeprägt, so dass durch die radial elastischen Eigenschaften der Ausdehnungselemente 6 thermomechanische Spannungen vermieden werden, indem die Ausdehnungselemente 6 eine thermisch bedingte Vergrößerung des Bremsscheibenreibringes 8 erlauben. Zugleich haben sie den Vorteil durch ihre Freiformgeometrie des radialen- und axialen Querschnitts, die Formgebung und die Ausrichtung in die primäre Drehrichtung großen mechanischen Belastungen standhalten zu können, ohne überaus massiv und somit schwer ausgebildet werden zu müssen.

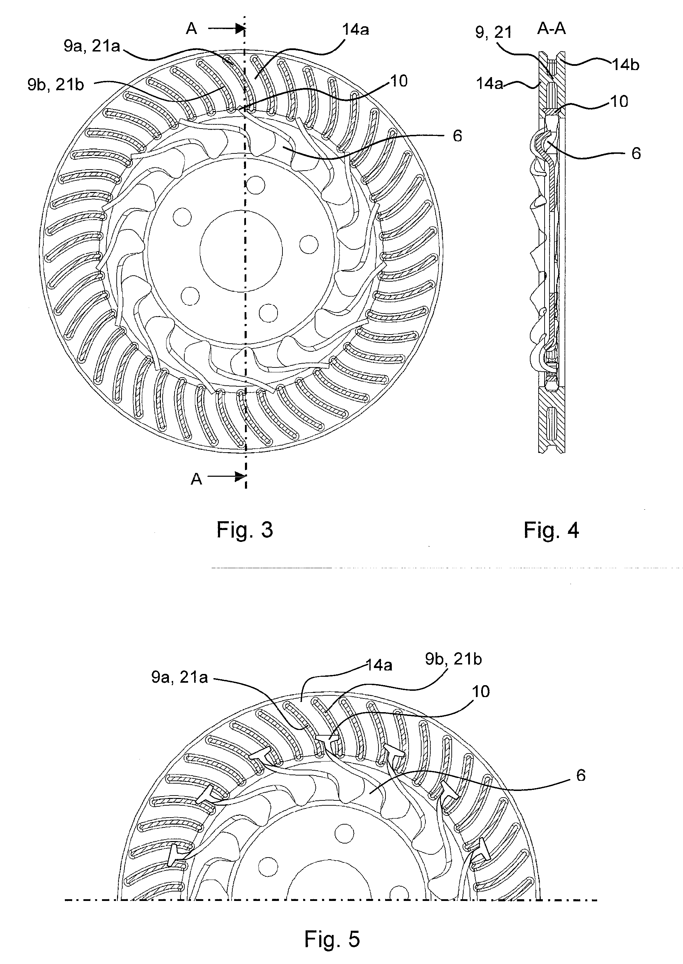

In den Figuren 3 und 4 ist eine weitere Ausführungsform einer Bremsscheibe 1 gezeigt. Analog zu den Figuren 1 und 2 ist der Bremsscheibentopf 2 in Radialrichtung formschlüssig und/oder stoffschlüssig durch den Hammerkopf 10 mit dem Bremsscheibenreibring 8 verbunden. Im Unterschied zu den Figuren 2 und 4 ist der Hammerkopf 10 nicht mit einem einzigen Verbindungssegment 9 bzw. Kühlrippe 21 verbunden, sondern zwischen den Segmenten 9a und 9b bzw. Kühlrippen 21 a und 21 b sowie den Reibbändern 14a und 14b positioniert, so dass die außen stehenden Enden des Hammerkopfes 10 formschlüssig, insbesondere in Radialrichtung, in die Reibbänder 14a und 14b eingreifen. Bei dieser Lösung können die Segmente 9 bzw. Kühlrippen 21 alle gleich dick ausgeführt werden. Auf diese Art und Weise können Massenanhäufungen im Bremsscheibenreibring 8 vermieden werden, aus denen Hot Spots resultieren würden.

Alternativ hierzu ist gemäß der Figur 5 eine weitere Bremsscheibe 1 gezeigt, bei der die Hammerköpfe 10 der Ausdehnungselemente 6 zwischen zwei benachbarten Segmenten 9a, 9b bzw. Kühlrippen 21 a, 21 b des Bremsscheibenreibringes 8 sowie zwischen den in Axialrichtung parallel angeordneten Reibbändern 14a, 14b angeordnet sind. Im Unterschied zum Ausführungsbeispiel der Figuren 3 und 4 sind die Enden des Hammerkopfes 10 des Ausdehnungselementes 6 formschlüssig, insbesondere in Radialrichtung, mit den Segmenten 9a, 9b bzw. Kühlrippen 21 a, 21 b verbunden.

In einem nicht dargestellten Ausführungsbeispiel sind die dem Bremsscheibenreibring 8 zugewandten Enden der Ausdehnungselemente 6 mit Widerhaken ausgeführt, die in Verbindungsöffnungen des Bremsscheibenreibringes 8 eingeklippst sind, so dass eine in Radialrichtung formschlüssige Verbindung zwischen Bremsscheibentopf 2 und Bremsscheibenreibring 8 entsteht. Diese Verbindungsvariante hat den Vorteil, dass der Bremsscheibenreibring 8 nicht in einem Gießverfahren mit dem Bremsscheibentopf 2 formschlüssig verbunden werden müsste, sonder nachträglich in den bereits vorhandenen Bremsscheibenreibring 2 eingeklippst werden könnten. In diesem Fall könnten vorteilhafter Weise für den Bremsscheibenreibring 8 alternative Materialien wie beispielsweise Kohlefaser oder Keramik verwendet werden, die bezüglich ihrer Reibeigenschaften und dem Gesamtgewicht der Bremsscheibe 1 eine Verbesserung darstellen würden.

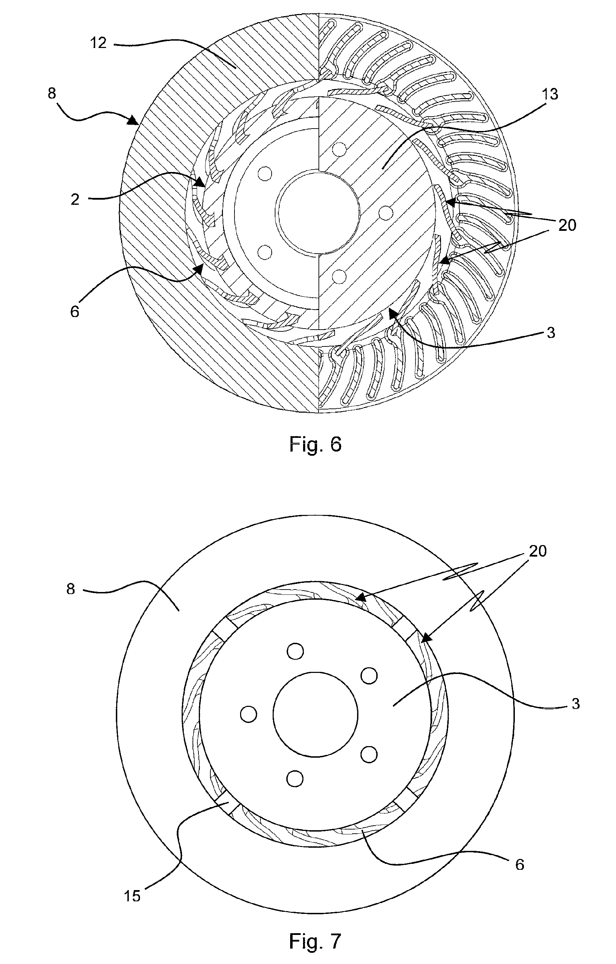

Figur 6 und Figur 7 zeigen eine Ausführung der Erfindung, bei welcher der Bremsscheibentopf2 nicht wie bei den vorherigen Ausführungsbeispielen aus dem gleichen Material und einteilig hergestellt ist, sondern der Topfring 3 sowie die Ausdehnungselemente 6 einzelne Bauteile darstellen. Die Ausdehnungselemente 6 sind hierbei als Einleger 20 ausgebildet. Des weiteren weist der Topfring 3 eine zu bearbeitende Auflagefläche 13 und der Bremsscheibenreibring 8 eine zu bearbeitende Reibfläche 12 auf. Zur Herstellung der in Figur 6 dargestellten Bremsscheibe 1 werden zunächst die, aus vorzugsweise Edelstahlblech bestehenden, Ausdehnungselemente 6 respektive Einleger 20 unter leichtem Radialdruck in eine Kokille gelegt. Die radial innen liegenden Enden der Ausdehnungselemente 6 werden, insbesondere in Radialrichtung, formschlüssig und/oder stoffschlüssig mit dem Topfring 3, der vorzugsweise aus Graugussmaterial oder Nichteisenmetall besteht, umgossen. Analog werden die radial äußeren Enden der Ausdehnungselemente 6 mit dem Bremsscheibenreibring 8 in Radialrichtung formschlüssig und/oder stoffschlüssig umgossen. Bei diesem Gießvorgang werden des weiteren redundante Verbindungselemente 15 zwischen dem Topfring 3 und dem Bremsscheibenreibring 8 gegossen wie in Figur 7 gezeigt. Diese versteifen die beiden Bauteile und entlasten somit die Ausdehnungselemente 6. Durch diese Verbindungselemente 15 ist es möglich, in einem weiteren Arbeitsschritt die Auflagefläche 13 sowie die Reibfläche 12 durch beispielsweise Drehen oder Schleifen nachzubearbeiten, ohne dabei in Axialrichtung zu starke Kräfte auf die Ausdehnungselemente 6 aufbringen zu müssen, durch die die Ausdehnungselemente 6 Schaden nehmen könnten. Danach wird die Bremsscheibe 1 durch das Abstanzen der Verbindungselemente 15 zwischen Topfring 3 und Bremsscheibenreibring 8 fertiggestellt.

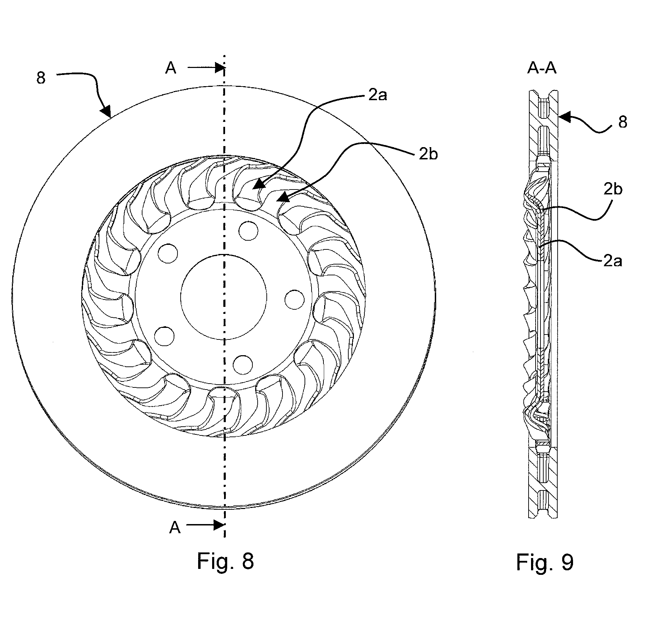

Die Figuren 8 und 9 zeigen eine Bremsscheibe 1 mit einem Bremsscheibentopf 2, der aus zwei separaten Bremsscheibentöpfen 2a, 2b besteht, wobei Bremsscheibentopf 2b über dem Bremsscheibentopf 2a angeordnet ist. Dieses Ausführungsbeispiel eignet sich insbesondere für Nutzfahrzeuge, damit der Bremsscheibentopf 2 höheren mechanischen Belastungen standhalten kann. In einer nicht dargestellten Ausführungsform sind die Ausdehnungselemente 6 der beiden Bremsscheibentöpfe 2a, 2b in entgegengesetzter Axialrichtung gebogen und bilden somit zusammen eine bauchige Form aus. In einer weiteren nicht dargestellten Ausführungsform sind die beiden Bremsscheibentöpfe gleich geformt und in Axialrichtung gegeneinander verdreht angeordnet. Alternativ können für eine derartige Bremsscheibe mehr als zwei Bremsscheibentöpfe 2 verwendet werden.

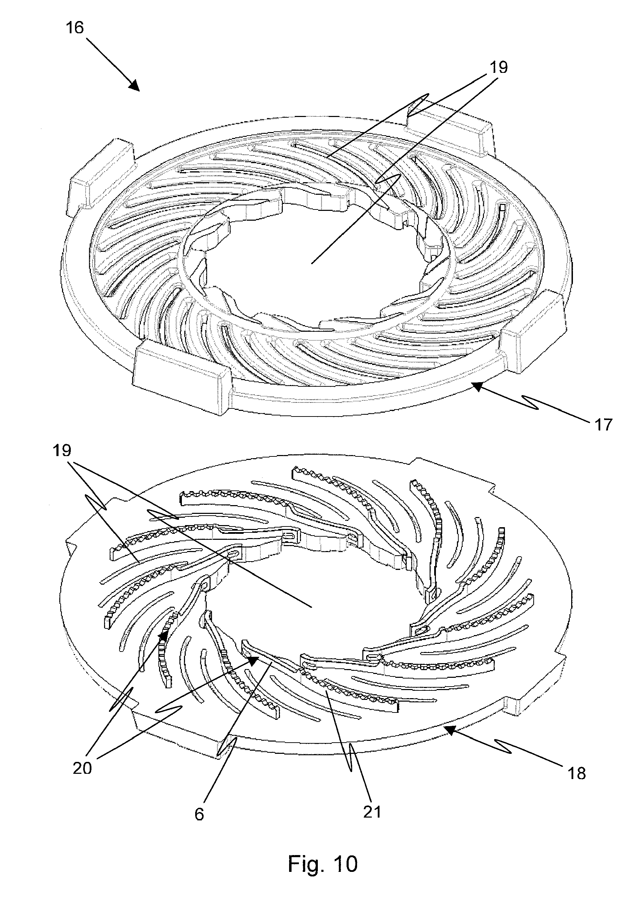

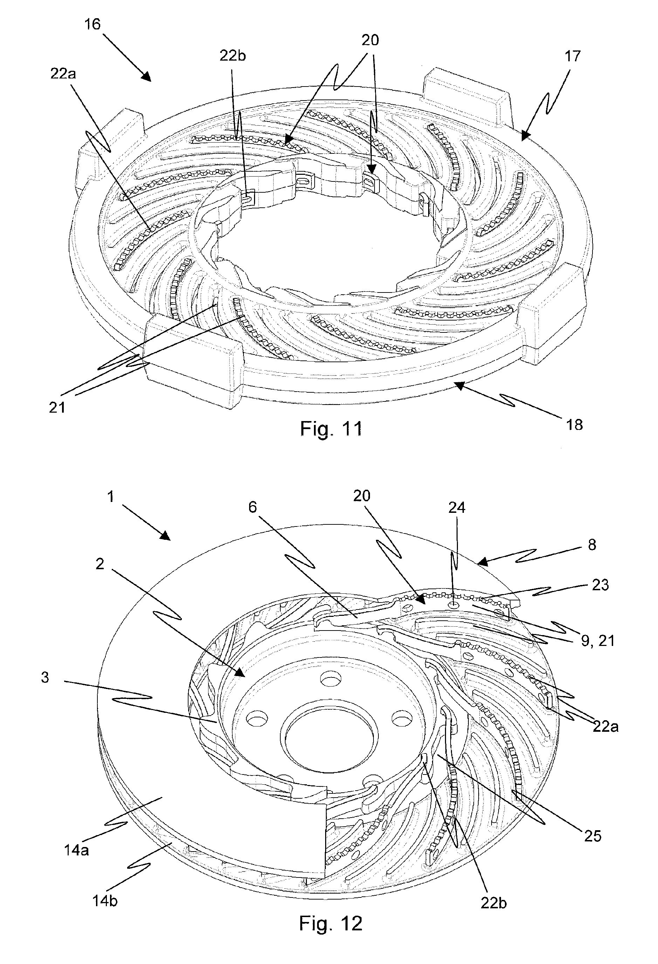

Figur 10 und Figur 11 zeigen einen zweiteiligen Kern 16 mit Aussparungen 19, wobei der Kern 16 aus einem Oberteil 17 und einem Unterteil 18 besteht. Der abgebildete Kern 16 findet Verwendung in einem weiteren erfindungsgemäßen Verfahren zur Herstellung der Bremsscheibe 1, bei dem die Ausdehnungselemente 6 gießtechnisch mit dem Bremsscheibenreibring 8 und dem Topfring 3 vergossen werden. Das Verfahren kann einzeln, aber auch in Kombination mit dem vorherigen Herstellungsverfahren Anwendung finden.

Bei dem vorliegenden Verfahren ist es besonders vorteilhaft, wenn der zweiteilige Kern zunächst mit einer Schlichte behandelt wird, da sich hierdurch die Oberflächengüte der gegossenen Bremsscheibe 1 verbessert. Danach werden, wie in Figur 10 dargestellt, zwischen dem Oberteil 17 und dem Unterteil 18 Einleger 20 in zumindest einige der Aussparungen 19 eingelegt. Die Einleger 20 sind im vorliegenden Ausführungsbeispiel einteilig und bilden sowohl die Ausdehnungselemente 6 als auch einige der Kühlrippen 21. In einer alternativen Ausführungsform können die Kühlrippen 21 aber auch nur zumindest teilweise durch den Einleger gebildet sein. Anschließend wird gemäß Figur 11 das Oberteil 17 mit dem Unterteil 18 verbunden, insbesondere verklebt. Die Einleger 20 werden hierbei von dem Kern 16 so umschlossen, dass im Wesentlichen nur die Kontaktbereiche 22a, 22b der Einleger 20 frei liegen. Danach wird der Kern 16 in einen in der Figur 10 und 11 nicht dargestellten gussüblichen Ober- und Unterkasten eingelegt. Zuletzt wird der Bremsscheibenreibring 8, bestehend aus zwei von einander getrennten Reibbändern 14a, 14b, mit den Einlegern 20 an den Kontaktbereichen 22a und/oder der Topfring 3 an den Kontaktbereichen 22b in Radialrichtung formschlüssig und/oder stoffschlüssig vergossen. Im Hinblick auf eine gewichtsreduzierte Ausführungsform der Bremsscheibe 1 ist es besonders vorteilhaft, wenn zunächst nur der Bremsscheibenreibring 8 gegossen wird und danach mit einem Nichteisenmetall der Topfring 3 gegossen wird. Ebenso ist es vorteilhaft, wenn aus Gründen der Gewichtsersparnis auch der Bremsscheibenreibring 8 aus einem leichteren Nichteisenmetall gegossen wird. Hierbei sollte jedoch der aus Nichteisenmetall gegossene Bremsscheibenreibring 8 in einem nachgelagerten Verfahrensschritt zur Steuerung des Wärmeeintrags mit einem Material beschichtet werden, dessen Schmelzpunkt im Vergleich zum Nichteisenmetall um so viel höher liegt, dass ein Schmelzen oder Verformen des Bremsscheibenreibrings 8 infolge einer sehr hohen Bremsbelastung weitgehend ausgeschlossen ist.

Die innenbelüftete Bremsscheibe 1 aus Figur 12 stellt eine besonders bevorzugte Ausführungsform dar. Sie weist einen Bremsscheibenreibring 8 und einen Bremsscheibentopf 2 auf, wobei der Bremsscheibentopf 2 im Wesentlichen einen Topfring 3 und Ausdehnungselemente 6 umfasst. Die Ausdehnungselemente 6 sind radialelastisch ausgebildet und verbinden den Topfring 3 mit dem Bremsscheibenreibring 8. Im Hinblick auf eine hohe Festigkeit sowie eine guten Radialelastizität weisen die Ausdehnungselemente 6 vorzugsweise eine Evolventengeometrie auf. Der Bremsscheibenreibring 8 weist zwei von einander in Axialrichtung beabstandete Reibbänder 14a, 14b auf, die über Segmente 9 miteinander verbunden sind. In dieser besonders bevorzugten Ausführungsform sind die Segmente 9 als Kühlrippen 21 ausgebildet. Durch die Kühlrippen 21 wird der Bremsscheibenreibring 8 bei Rotation innenbelüftet. Die Ausdehnungselemente 6 und zumindest einige der Segmente 9 respektive Kühlrippen 21 sind durch Einleger 20 gebildet. Im Bereich des Bremsscheibenreibrings 8 weisen die Einleger 20 im Kontaktbereich 22a Zähne 23 auf, die bei der gießtechnischen Herstellung der Verbindung zwischen den Einlegern 20 und den Reibbändern 14a, 14b zumindest teilweise wegschmelzen, so dass eine stoffschlüssige und/oder in Radialrichtung formschlüssige Verbindung entsteht. Der Topfring 3 ist ebenfalls gießtechnisch mit den Einlegern 20 im Kontaktbereich 22b in Radialrichtung formschlüssig und/oder stoffschlüssig vergossen. Um den thermischen Belastungen während des Bremsvorgangs entgegenzuwirken, weisen die Einleger 20 im Bereich des Bremsscheibenreibrings 8 Kühlöffnungen 24 auf, die kreisförmig ausgebildet sind. Des weiteren weist der Topfring 3 an seinem äußeren Umfang im Verbindungsbereich mit den Einlegern 20 Materialaussparungen 25 auf, so dass das Gewicht der Bremsscheibe 1 reduziert wird. Der Topfring 3 erhält hierdurch ein sägezahnähnliches Profil.

Die vorliegende Erfindung ist nicht auf die dargestellten und beschriebenen Ausführungsbeispiele beschränkt. Insbesondere ist die Adaption der erfindungsgemäßen Bremsscheibe zur Verwendung mit einem elektrischen Radnabenmotor denkbar. Abwandlungen im Rahmen der Patentansprüche sind ebenso möglich wie eine Kombination der Merkmale, auch wenn sie in unterschiedlichen Ausführungsbeispielen dargestellt und beschrieben sind.

## Patentansprüche

1. Bremsscheibe
mit einem Bremsscheibenreibring (8) und
einem Bremsscheibentopf (2),
bestehend aus einem Topfring (3) und Ausdehnungselementen (6), die radial am Topfring (3) angeordnet sind und
an ihrem dem Topfring abgewandten Ende mit dem Bremsscheibenreibring (8) verbunden sind, wobei die Ausdehnungselemente (6) länger sind als der kürzeste Abstand zwischen Topfring (3) und Bremsscheibenreibring (8),
**dadurch gekennzeichnet dass**
die Ausdehnungselemente (6) radialelastisch ausgebildet sind und sich an die thermische Verformung des Bremsscheibenreibrings (8) anpassen, so dass eine Schirmung des Bremsscheibenreibrings (8) weitgehend ausgeschlossen ist,
dass der Topfring (3) und die Ausdehnungselemente (6) aus dem gleichen Werkstoff und einteilig hergestellt sind,
so dass ein einteiliger Einleger (20) ausgebildet ist, und
dass die Ausdehnungselemente (6) des einteiligen Einlegers (20) mit dem Bremsscheibenreibring (8) gießtechnisch in Radialrichtung formschlüssig und/oder stoffschlüssig verbunden sind.

2. Bremsscheibe nach dem vorherigen Anspruch, **dadurch gekennzeichnet, dass** jeweils zwei benachbarte Ausdehnungselemente (6) beabstandet voneinander angeordnet sind.

3. Bremsscheibe nach einem oder mehreren der vorherigen Ansprüche, **dadurch gekennzeichnet, dass** die Ausdehnungselemente (6) im Längs- und/oder Querschnitt eine Freiformgeometrie und/oder eine Evolventengeometrie aufweisen.

4. Bremsscheibe nach einem oder mehreren der vorherigen Ansprüche, **dadurch gekennzeichnet, dass** die Bremsscheibe (1) eine primäre Drehrichtung aufweist und die dem Topfring abgewandten Enden der Ausdehnungselemente (6) in und/oder gegen die primäre Drehrichtung der Bremsscheibe (1) zeigen.

5. Bremsscheibe nach einem oder mehreren der vorherigen Ansprüche, **dadurch gekennzeichnet, dass** sich der Querschnitt der Ausdehnungselemente (6) ausgehend von dem Topfring zugewandten Ende bis hin zum Topfring abgewandten Ende verändert.

6. Bremsscheibe nach einem oder mehreren der vorherigen Ansprüche, **dadurch gekennzeichnet, dass** die Ausdehnungselemente (6) mindestens einen durch den Querschnitt bestimmten Soll-Biegebereich (7a, 7b) aufweisen, in dem die Ausdehnungselemente (6) in Axial- und/oder Radialrichtung der Bremsscheibe (1) gebogen sind.

7. Bremsscheibe nach einem oder mehreren der vorherigen Ansprüche, **dadurch gekennzeichnet, dass** die Ausdehnungselemente (6) an dem Bremsscheibenreibring zugewandten Ende eine Hinterschneidung aufweisen.

8. Bremsscheibe nach einem oder mehreren der vorherigen Ansprüche, **dadurch gekennzeichnet, dass** der Bremsscheibenreibring (8) massiv ohne Zwischenräume ausgeprägt ist.

9. Bremsscheibe nach einem oder mehreren der vorherigen Ansprüche, **dadurch gekennzeichnet, dass** der Bremsscheibenreibring (8) aus einem Bremsscheibenreibbandpaar (14a, 14b) besteht, das über Segmente (9) miteinander verbunden ist.

10. Bremsscheibe nach einem oder mehreren der vorherigen Ansprüche, **dadurch gekennzeichnet, dass** mindestens ein Ausdehnungselement (6) in Radialrichtung formschlüssig und/oder stoffschlüssig mit einem der Segmente (9) verbunden ist.

11. Bremsscheibe nach einem oder mehreren der vorherigen Ansprüche, **dadurch gekennzeichnet, dass** mindestens ein Ausdehnungselement (6) zwischen zwei Segmenten (9) und zwischen dem Bremsscheibenreibbandpaar (14a, 14b) angeordnet und in Radialrichtung formschlüssig und/oder stoffschlüssig mit mindestens einem der Segmente (9) verbunden ist.

12. Bremsscheibe nach einem oder mehreren der vorherigen Ansprüche, **dadurch gekennzeichnet, dass** mindestens ein Ausdehnungselement (6) zwischen zwei Segmenten (9) und zwischen dem Bremsscheibenreibbandpaar (14a, 14b) angeordnet und in Radialrichtung formschlüssig und/oder stoffschlüssig mit dem Bremsscheibenreibbandpaar (14a, 14b) verbunden ist.

## Claims

1. A brake disk,
comprising a brake disk friction ring (8) and
a brake disk chamber (2),
consisting of a chamber ring (3) and expansion elements (6) arranged radially on the chamber ring (3) and
connected on their end facing away from the chamber ring to the brake disk friction ring (8),
wherein the expansion elements (6) are longer than the shortest distance between the chamber ring (3) and the brake disk friction ring (8),
**characterized in that**
the expansion elements (6) are designed to be radially elastic and adapt to the thermal deformation of the brake disk friction ring (8), so that a shielding of the brake disk friction ring (8) is largely excluded,
that the chamber ring (3) and the expansion elements (6) are manufactured from the same material and in one piece,
so that one-piece insert (20) is formed, and
that the expansion elements (6) of the one-piece insert (20) are connected to the brake disk friction ring (8) in the radial direction in a positive and/or bonded manner.

2. The brake disk according to the previous claim, **characterized in that** each two adjacent expansion elements (6) are arranged at a distance from one another.

3. The brake disk according to one or more of the previous claims, **characterized in that** the expansion elements (6) have a freeform geometry and/or an involute geometry in longitudinal section and/or in cross section.

4. The brake disk according to one or more of the previous claims, **characterized in that** the brake disk (1) has a primary direction of rotation and that ends of the expansion elements (6) which ends face away from the chamber ring face in and/or against the primary direction of rotation of the brake disk (1).

5. The brake disk according to one or more of the previous claims, **characterized in that** the cross section of the expansion elements (6) changes, starting from the end facing the chamber ring to the end facing away from the chamber ring.

6. The brake disk according to one or more of the previous claims, **characterized in that** the expansion elements (6) have at least one theoretical bending area (7a, 7b) determined by the cross section in which area the expansion elements (6) are bent in the axial and/or radial direction of the brake disk. (1).

7. The brake disk according to one or more of the previous claims, **characterized in that** the expansion elements (6) have an undercut on the end facing the brake disk friction ring.

8. The brake disk according to one or more of the previous claims, **characterized in that** the brake disk friction ring (8) is stamped solidly without intermediate spaces.

9. The brake disk according to one or more of the previous claims, **characterized in that** the brake disk friction ring (8) consists of a brake disk friction band pair (14a, 14b) that is connected to one another by segments (9).

10. The brake disk according to one or more of the previous claims, **characterized in that** at least one expansion element (6) is connected in a positive and/or bonded manner in the radial direction to one of the segments (9).

11. The brake disk according to one or more of the previous claims, **characterized in that** at least one expansion element (6) is arranged between two segments (9) and between the brake disk friction band pair (14a, 14b) and is connected in a positive and/or bonded manner in the radial direction to at least one of the segments (9).

12. The brake disk according to one or more of the previous claims, **characterized in that** at least one expansion element (6) is arranged between two segments (9) and between the brake disk friction band pair (14a, 14b) and is connected in a positive and/or bonded manner in the radial direction to the brake disk friction band pair (14a, 14b).

## Revendications

1. Disque de frein
avec une bague de friction de disque de frein (8) et
une nacelle de disque de frein (2),
composé d'un anneau à boisseau (3) et d'éléments d'expansion (6), qui sont disposés radialement sur l'anneau à boisseau (3) et
sont reliés à la bague de friction de disque de frein (8) par leur extrémité éloignée de l'anneau à boisseau,
sachant que les éléments d'expansion (6) sont plus longs que la distance la plus courte entre l'anneau à boisseau (3) et la bague de friction de disque de frein (8),
**caractérisé en ce que**
les éléments d'expansion (6) se présentent sous une forme radialement élastique et s'adaptent à la déformation thermique de la bague de friction de disque de frein (8), si bien qu'un écrannage de la bague de friction de disque de frein (8) est quasiment exclu,
l'anneau à boisseau (3) et les éléments d'expansion (6) sont fabriqués à partir du même matériau et en une seule pièce, si bien qu'il se forme un insert en une pièce (20), et
les éléments d'expansion (6) de l'insert en une pièce (20) sont reliés par coulage dans le sens radial, par un assemblage par forme et/ou par matériau, avec la bague de friction de disque de frein (8).

2. Disque de frein selon la revendication précédente, **caractérisé en ce que** respectivement deux éléments d'expansion (6) voisins sont disposés distants l'un de l'autre.

3. Disque de frein selon l'une ou plusieurs des revendications précédentes, **caractérisé en ce que** les éléments d'expansion (6) présentent en section longitudinale et/ou transversale une géométrie en forme libre et/ou une géométrie de développante.

4. Disque de frein selon l'une ou plusieurs des revendications précédentes, **caractérisé en ce que** le disque de frein (1) présente un sens de rotation primaire et les extrémités des éléments d'expansion (6) éloignées de l'anneau à boisseau sont orientées dans et/ou contre le sens de rotation primaire du disque de frein (1).

5. Disque de frein selon l'une ou plusieurs des revendications précédentes, **caractérisé en ce que** la section transversale des éléments d'expansion (6) varie de l'extrémité proche de l'anneau à boisseau jusqu'à l'extrémité éloignée de l'anneau à boisseau.

6. Disque de frein selon l'une ou plusieurs des revendications précédentes, **caractérisé en ce que** les éléments d'expansion (6) présentent au moins une zone de flexion théorique (7a, 7b) déterminée par la section transversale, dans laquelle les éléments d'expansion (6) sont courbés dans le sens axial et/ou radial du disque de frein (1).

7. Disque de frein selon l'une ou plusieurs des revendications précédentes, **caractérisé en ce que** les éléments d'expansion (6) présentent une contre-dépouille à l'extrémité proche de la bague de friction de disque de frein.

8. Disque de frein selon l'une ou plusieurs des revendications précédentes, **caractérisé en ce que** la bague de friction de disque de frein (8) se présente sous une forme massive sans interstices.

9. Disque de frein selon l'une ou plusieurs des revendications précédentes, **caractérisé en ce que** la bague de friction de disque de frein (8) se compose d'une paire de bandes de friction de disque de frein (14a, 14b), qui sont reliées l'une avec l'autre par des segments (9).

10. Disque de frein selon l'une ou plusieurs des revendications précédentes, **caractérisé en ce qu'**au moins un élément d'expansion (6) est relié avec l'un des segments (9) dans le sens radial par un assemblage de forme et/ou de matériau.

11. Disque de frein selon l'une ou plusieurs des revendications précédentes, **caractérisé en ce qu'**au moins un élément d'expansion (6) est disposé entre deux segments (9) et entre la paire de bandes de friction de disque de frein (14a, 14b) et relié dans le sens radial avec au moins l'un des segments (9) par un assemblage de forme et/ou de matériau.

12. Disque de frein selon l'une ou plusieurs des revendications précédentes, **caractérisé en ce qu'**au moins un élément d'expansion (6) est disposé entre deux segments (9) et entre la paire de bandes de friction de disque de frein (14a, 14b) et relié dans le sens radial avec la paire de bandes de friction de disque de frein (14a, 14b) par un assemblage de forme et/ou de matériau.
